# EUROPÄISCHE PATENTSCHRIFT

(11) **EP 1 759 809 B1**
(45) Veröffentlichungstag und Bekanntmachung des Hinweises auf die Patenterteilung: **27.10.2010**
(21) Anmeldenummer: 06017491.9
(22) Anmeldetag: 23.08.2006
(51) Int. Cl.: B23Q 1/54

(54) **Werkzeugmaschine mit einem durch längeninvariante Antriebsstreben bewegbaren Kreuzschlitten.**
Machine tool with a cross slide movable by means of actuating rods of constant length.
Machine-outil avec chariot deux-axes mis en mouvement par des barres motrices de longueur constante.

(30) Priorität: 01.09.2005 DE 102005041496
(43) Veröffentlichungstag der Anmeldung: 07.03.2007
(73) Patentinhaber: Index-Werke GmbH & Co. KG Hahn & Tessky, 73730 Esslingen (DE)
(72) Erfinder: Großmann, Walter, 73666 Baltmannsweiler (DE)
(74) Vertreter: Hoeger, Stellrecht & Partner Patentanwälte

(56) Entgegenhaltungen:
- EP-A- 1 329 281
- WO-A-97/22436
- WO-A-99/08832
- WO-A-99/32256
- DE-A1- 10 019 788
- US-A1- 2005 064 800

## Beschreibung

Die Erfindung betrifft eine Werkzeugmaschine nach dem Oberbegriff von Anspruch 1.

Derartige Werkzeugmaschinen sind bereits aus dem Stand der Technik, beispielsweise der DE 100 19 788 A1 bekannt.

Bei einer derartigen Werkzeugmaschine hat sich gezeigt, dass die erforderliche Präzision bei der Positionierung des zweiten Schlittenelements aufwendige Messsysteme erfordert.

Der Erfindung liegt daher die Aufgabe zugrunde, eine exakte Positionierung des zweiten Schlittenelements durch konstruktive Maßnahmen zu erreichen.

Diese Aufgabe wird bei einer Werkzeugmaschine der eingangs beschriebenen Art erfindungsgemäß durch die kennzeichnenden Merkmale von Anspruch 1 gelöst.

Der Vorteil der erfindungsgemäßen Lösung ist darin zu sehen, dass durch die vier Antriebsstreben die Präzision der Positionierung des zweiten Schlittenelements deutlich verbessert wird, insbesondere durch eine Verbesserung der Torsionssteifigkeit um senkrecht zur Kreuzschlittenbewegungsfläche verlaufende Drehachsen, insbesondere um eine sogenannte B-Achse.

Besonders günstig lässt sich das zweite Schlittenelement dann positionieren, wenn die vier Antriebsstreben zwei Antriebsgruppen mit je zwei nicht parallelen Antriebsstreben bilden, so dass die beiden Antriebsgruppen die Position des bewegbaren Schlittenelements eindeutig festlegbar ist.

Eine besonders zweckmäßige Lösung sieht dabei vor, dass mit der ersten Antriebsgruppe eine Position des Schlittenelements bis auf eine erste noch mögliche Bewegungsform festlegbar ist.

Eine weitere vorteilhafte Lösung sieht vor, dass mit der zweiten Antriebsgruppe eine Position des Schlittenelements bis auf eine zweite noch mögliche Bewegungsform festlegbar ist.

Da die erste Antriebsgruppe und die zweite Antriebsgruppe jedoch nicht an identischen Stellen des bewegbaren Schlittenelements angreifen, ist damit eine eindeutige Positionierung des bewegbaren Schlittenelements gegeben, da die aufgrund der ersten Antriebsgruppe erste noch mögliche Bewegungsform durch die zweite Antriebsgruppe blockiert wird und die durch die zweite Antriebsgruppe zweite noch mögliche Bewegungsform durch die erste Antriebsgruppe blockiert wird.

Prinzipiell könnten die Antriebsstreben jeder Antriebsgruppe mit einem eigenen Angriffspunkt an dem bewegbaren Schlittenelement angreifen, so dass insgesamt vier Antriebsstreben vorgesehen werden können, die jeweils mit eigenen Angriffspunkten an dem Schlittenelement angreifen.

Zur Verbesserung der Stabilität der Positionierung hat es sich jedoch als vorteilhaft erwiesen, wenn die Antriebsstreben einer der Antriebsgruppen an einem gemeinsamen Angriffspunkt am bewegbaren Schlittenelement angreifen.

In diesem Fall stellt die jeweilige noch mögliche Bewegungsform des Schlittenelements eine Schwenkbewegung um den gemeinsamen Angriffspunkt dar.

Noch vorteilhafter für die Präzision der Positionierung des Schlittenelements ist es jedoch, wenn die Antriebsstreben jeder der Antriebsgruppen jeweils an einem von zwei im Abstand voneinander angeordneten Angriffpunkten am Schlittenelement angreifen.

In diesem Fall sind somit an dem Schlittenelement nur zwei Angriffspunkte vorgesehen, von denen jeder bis auf die noch freie mögliche Bewegungsform in Form einer Schwenkbewegung durch die jeweilige Antriebsgruppe eindeutig und stabil definiert ist.

Hinsichtlich des Verlaufs der Führungsrichtungen der Führungsschlitten wurden im Zusammenhang mit der bisherigen Beschreibung der erfindungsgemäßen Lösung keinerlei Angaben gemacht. Beispielsweise ist es denkbar, jeweils zwei Führungsschlitten parallel zu derselben Führungsrichtung bewegbar anzuordnen. Dies könnten zum Beispiel die Führungsschlitten jeweils einer Antriebsgruppe sein, wobei sich die Führungsrichtungen der beiden Antriebsgruppen noch voneinander unterscheiden könnten.

Um den Raumbedarf für die Antriebsvorrichtung zu minimieren ist es jedoch vorteilhaft, wenn jeweils zwei der Führungsschlitten an einer gemeinsamen Führungsbahn geführt sind.

Dabei besteht die Möglichkeit, beispielsweise die Führungsschlitten jeder Antriebsgruppe auf einer gemeinsamen Führungsbahn laufen zu lassen.

Eine weitere vorteilhafte Lösung sieht vor, dass die Führungsschlitten der Antriebsstreben in zueinander parallel verlaufenden Führungsrichtungen geführt sind.

Damit besteht grundsätzlich die Möglichkeit, jeden der Führungsschlitten längs einer eigenen Führungsrichtung zu führen, die allerdings alle parallel zueinander verlaufen.

Besonders günstig ist es jedoch, wenn ein erster Führungsschlitten der ersten Antriebsgruppe und ein erster Führungsschlitten der zweiten Antriebsgruppe längs derselben Führungsrichtung bewegbar sind.

Noch raumsparender ist eine solche Lösung, wenn die ersten Führungsschlitten der ersten und zweiten Antriebsgruppe auf einer gemeinsamen Führungsbahn geführt sind.

Weiterhin sieht ein vorteilhaftes Ausführungsbeispiel vor, dass ein zweiter Führungsschlitten der ersten Antriebsgruppe und ein zweiter Führungsschlitten der zweiten Antriebsgruppe längs derselben Führungsrichtung bewegbar sind.

Ferner ist es günstig, wenn ein zweiter Führungsschlitten der ersten Antriebsgruppe und ein zweiter Führungsschlitten der zweiten Antriebsgruppe auf einer gemeinsamen Führungsbahn geführt sind.

Um den Antrieb der Führungsschlitten zu vereinfachen, sieht eine besonders vorteilhafte Lösung vor, dass die ersten Führungsschlitten der ersten und zweiten Antriebsgruppe starr miteinander gekoppelt sind, das heißt, dass die ersten Führungsschlitten der ersten und zweiten Antriebsgruppe nur gemeinsam miteinander bewegbar sind.

Eine derartige starre Kopplung der ersten Führungsschlitten miteinander kann beispielsweise durch eine über die Steuerung erfolgende starre Kopplung der Antriebe der beiden ersten Führungsschlitten erfolgen.

Besonders einfach realisierbar ist die starre Kopplung, wenn die ersten Führungsschlitten der ersten und zweiten Antriebsgruppe mechanisch starr miteinander gekoppelt sind.

Alternativ dazu ist es aber auch denkbar, die ersten Führungsschlitten der ersten und zweiten Antriebsgruppe zu einem gemeinsamen Führungsschlitten zu vereinigen.

Ferner ist in ähnlicher Weise vorgesehen, dass die zweiten Führungsschlitten der ersten und zweiten Antriebsgruppe starr miteinander gekoppelt sind, so dass auch diese in einfacher Weise antreibbar sind.

Dabei wäre es ebenfalls denkbar, eine starre Kopplung der zweiten Führungsschlitten über eine Steuerung der Antriebe der beiden zweiten Führungsschlitten vorzusehen, wobei die starre Kopplung einfacher realisierbar ist, wenn die zweiten Führungsschlitten der ersten und zweiten Antriebsgruppe mechanisch starr miteinander gekoppelt sind.

Eine räumlich besonders günstig und klein bauende Lösung sieht vor, dass alle Führungsschlitten auf einer gemeinsamen Führungsbahn angeordnet sind.

Vorzugsweise sind beim Vorsehen aller Führungsschlitten auf einer gemeinsamen Führungsbahn die Führungsschlitten aufeinanderfolgend auf dieser angeordnet.

Besonders günstig ist es dabei, wenn die Führungsschlitten jeder Antriebsgruppe unmittelbar aufeinanderfolgend angeordnet sind, wobei dieses unmittelbar aufeinanderfolgende Anordnen der Führungsschlitten im Rahmen der erfindungsgemäßen Lösung zusätzlich zu der steuerbaren variablen Position längs der Führungsrichtung einen steuerbaren variablen Abstand der Führungsschlitten voneinander vorsieht.

Eine mechanische Kopplung der ersten Führungsschlitten der Antriebsgruppen und der zweiten Führungsschlitten der Antriebsgruppen lässt sich beim Vorsehen aller Führungsschlitten auf einer gemeinsamen Führungsbahn besonders günstig realisieren, wenn die mechanisch starre Verbindung zwischen den ersten Führungsschlitten auf einer anderen Seite der Führungsbahn verläuft als die mechanisch starre Verbindung zwischen den zweiten Führungsschlitten.

Jeweils zwei der Antriebsstreben verlaufen parallel zueinander.

Vorzugsweise ist dabei vorgesehen, dass die an den ersten Führungsschlitten der Antriebsgruppen angelenkten Antriebsstreben parallel zueinander verlaufen und die an den zweiten Führungsschlitten der Antriebsgruppen angelenkten Antriebsstreben parallel zueinander verlaufen.

Ferner ist die erfindungsgemäße Kinematik besonders einfach dann ansteuerbar, wenn jeweils zwei der vier Antriebsstreben dieselbe Länge aufweisen.

Vorzugsweise sind die Antriebsstreben so ausgelegt, dass alle vier Antriebsstreben dieselbe Länge aufweisen.

Hinsichtlich des Antriebs der Führungsschlitten wäre es grundsätzlich denkbar, jeden der Führungsschlitten separat anzutreiben.

Insbesondere in dem Fall, dass die jeweils ersten Führungsschlitten der Antriebsgruppen und die jeweils zweiten Führungsschlitten der Antriebsgruppen starr miteinander gekoppelt sind, ist es ausreichend, wenn den jeweils mechanisch gekoppelten Führungsschlitten ein Linearantrieb zugeordnet ist.

Der Linearantrieb könnte beispielsweise ein Linearmotor sein. Mechanisch einfacher ist es jedoch, wenn der Linearantrieb ein Spindelantrieb ist.

Hinsichtlich der Anordnung der Führungsbahnen für die Führungsschlitten wurden bislang keine näheren Angaben gemacht. So sieht eine konstruktiv besonders vorteilhafte Lösung vor, dass alle Führungsbahnen für alle Führungsschlitten auf derselben Seite der Angriffspunkte angeordnet sind, um die erfindungsgemäße Antriebsvorrichtung möglichst kompakt auszugestalten.

Um die Relativposition und somit insbesondere die Position in X-Richtung einfach erfassen zu können, ist ein Messsystem vorgesehen, welches eine Relativposition der ersten Führungsschlitten zu den zweiten Führungsschlitten unmittelbar erfasst.

Besonders günstig lässt sich eine derartige Positionserfassung realisieren, wenn das Messsystem an Verbindungsstreben der ersten Führungsschlitten und der zweiten Führungsschlitten angeordnet ist.

An dem Schlittenelement greifen längeninvariante Antriebsstreben an, von denen jede mit einem Führungsschlitten gelenkig verbunden ist, der quer zur Längsrichtung der Antriebsstreben linear bewegbar geführt ist und dass Führungsbahnen für mindestens zwei der Führungsschlitten auf einer der Spindelachse zugewandten Seite der Angriffspunkte angeordnet sind.

Der Vorteil dieser Lösung ist darin zu sehen, dass die Antriebsstreben sich somit ausgehend von einem Bereich der Werkzeugmaschine erstrecken, welcher bezogen auf die Spindelachse geringen thermischen Verlagerungen unterliegt und somit auch die durch die Antriebsvorrichtung vorgegebene Position des bewegbaren Schlittenelements nur geringen thermischen Verlagerungen unterliegt.

Ferner ist es bei dieser Lösung vorteilhaft, dass in die Antriebsstreben aufgrund ihrer Längeninvarianz kein unmittelbarer Wärmeeintrag durch eine Längenverstellung derselben erfolgt, so dass auch die thermische Verlagerung im Bereich der Antriebsstreben gering gehalten werden kann.

Bei dieser Lösung ist es besonders günstig, wenn die Führungsbahnen für die Führungsschlitten nahe einer Referenzebene angeordnet sind, die durch die Spindelachse und senkrecht zur X-Richtung der Werkzeugmaschine verläuft.

Diese Lösung hat den großen Vorteil, dass damit bereits die Basis für die Antriebsstreben der Antriebsvorrichtung nahe der Spindelachse liegt und somit sich im Wesentlichen lediglich thermische Verlagerungen im Bereich der Antriebsstreben auf die Position des bewegbaren Schlittenelements auswirken, während alle übrigen thermischen Verlagerungen, insbesondere im Maschinenbettkörper im Wesentlichen keinerlei Auswirkung auf die Position des bewegbaren Schlittenelements relativ zur Spindelachse haben.

Besonders günstig ist es, wenn die Führungsbahnen für alle Führungsschlitten auf der der Spindelachse zugewandten Seite der Angriffspunkte angeordnet sind, so dass alle Antriebsstreben sich bei einer thermisch bedingten Veränderung ihrer Länge sich in derselben Richtung auf die Positioniergenauigkeit auswirken.

Im Übrigen haben weitere vorteilhafte Ausführungsformen dieselben Merkmale wie voranstehend beschrieben.

Weitere Merkmale und Vorteile der Erfindung sind Gegenstand der nachfolgenden Beschreibung sowie der zeichnerischen Darstellung eines Ausführungsbeispiels einer erfindungsgemäßen Lösung.

In der Zeichnung zeigen:
- Fig. 1: eine perspektivische schematische Darstellung eines Ausführungsbeispiels einer Werkzeugmaschine mit Blick auf eine Frontseite, allerdings ohne Darstellung eines maschinenbettseitigen Schlittenelements für ein oberes bewegbares Schlittenelement;
- Fig. 2: eine perspektivische Darstellung der Werkzeugmaschine mit Blick auf die Rückseite;
- Fig. 3: eine perspektivische Darstellung der Antriebsvorrichtung, wie sie in dem dargestellten Ausführungsbeispiel der Werkzeugmaschine zum Einsatz kommt und
- Fig. 4: einen Schnitt längs Linie 4-4 in Fig. 3.

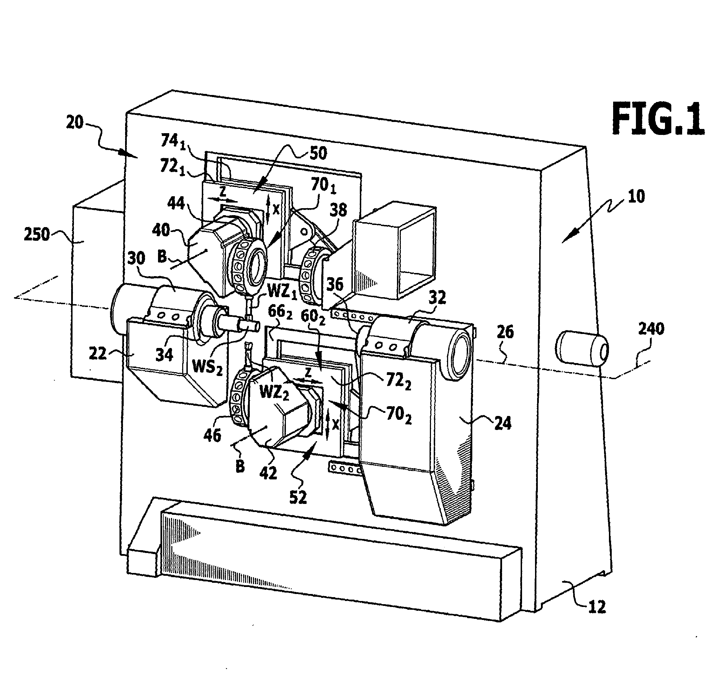

Ein Ausführungsbeispiel einer erfindungsgemäßen Werkzeugmaschine, dargestellt in Fig. 1, umfasst ein als Ganzes mit 10 bezeichnetes Maschinengestell, welches mit einem Fuß 12 auf einer Grundfläche aufsetzbar ist und einen als Ganzes mit 20 bezeichneten Maschinenbettkörper umfasst, welcher vorzugsweise ähnlich einer Platte ausgebildet ist.

Auf diesem Maschinenbettkörper 20 sitzen beispielsweise zwei Spindelkästen 22, 24, in denen koaxial zu einer Spindelachse 26 einander gegenüberliegende Werkstückspindeln 30, 32 angeordnet sind, welche mit erste Aufnahmen darstellenden Werkstückaufnahmen 34, 36 für Werkstücke WS versehen sind, welche einander zugewandt angeordnet sind.

In diesem Fall stellt die Werkzeugmaschine eine Drehmaschine dar.

Es wäre aber auch denkbar, anstelle von Werkstückspindeln 30, 32 Werkzeugspindeln mit Werkzeugaufnahmen vorzusehen.

Bei diesem Ausführungsbeispiel der erfindungsgemäßen Werkzeugmaschine ist der Spindelkasten 22 stationär am Maschinenbettkörper 20 angeordnet, während der Spindelkasten 24 beispielsweise in Richtung der Spindelachse 26 verfahrbar ist.

Es wäre aber auch denkbar, beide Spindelkästen 22, 24 relativ zum Maschinenbettkörper 20 bewegbar anzuordnen.

Zur Bearbeitung der in den Werkstückaufnahmen 34, 36 angeordneten Werkstücke WS, sind ein nur quer zur Spindelachse 26 verfahrbarer und der Werkstückspindel 32 zugeordneter Werkzeugträger 38 und außerdem den Werkstückspindeln 30, 32 zugeordnete Werkzeugträger 40, 42 vorgesehen, von denen jeder eine Vielzahl von zweite Aufnahmen darstellenden Werkzeugaufnahmen 44, 46 für Werkzeuge WZ umfasst.

Um die Werkzeugträger 40, 42 und somit die Werkzeugaufnahmen 44, 46 relativ zu den Werkstückaufnahmen 34, 36 bewegen zu können, sind die Werkzeugträger 40, 42 auf beispielsweise identisch aufgebauten Kreuzschlittensystemen 50, 52 angeordnet, von denen jedes ein maschinenbettseitiges erstes Schlittenelement 60 umfasst, welches beispielsweise in Form einer Platte 62 mit einem Durchbruch 64 in einem mittleren Bereich derselben ausgebildet ist und um den Durchbruch 64 herum im Wesentlichen parallel zueinander verlaufende Oberflächen 66, 68 aufweist, wobei die Oberflächen 66 frontseitige Oberflächen und die Oberflächen 68 rückseitige Oberflächen der Platte 62 sind.

Alternativ dazu ist es auch denkbar, anstelle der Platte 62 beiderseits des Durchbruchs 64 Führungsleisten vorzusehen, welche mit ihren beiden Oberflächen 66, 68 jeweils in derselben Ebene liegen.

An diesem maschinenbettseitigen ersten Schlittenelement 60 ist ein werkzeugträgerseitiges zweites Schlittenelement 70 bewegbar geführt, und zwar dadurch, dass dieses mit Führungskörpern 72, 74 auf den Oberflächen 66, 68 gleitet.

Durch die parallel zueinander verlaufenden Oberflächen 66, 68 des ersten Schlittenelements 60 wird somit eine Kreuzschlittenbewegungsfläche definiert, parallel zu welcher das jeweilige zweite Schlittenelement 70 sowohl in X-Richtung, das heißt quer zur Spindelachse 26 als auch in Z-Richtung, das heißt parallel zur Spindelachse 26, relativ zum Maschinenbettkörper 20 bewegbar ist.

Weitere Einzelheiten und Ausführungsformen derartiger Kreuzschlittensysteme 50 und 52, bei welchen das jeweilige zweite Schlittenelement 70 in Richtung beider Kreuzschlittenbewegungsachsen X, Z bewegbar ist, sind in der deutschen Patentanmeldung DE 100 19 788 A1 beschrieben, auf welche hinsichtlich der Ausführungsformen der verschiedenen Kreuzschlittensysteme Bezug genommen wird.

Vorzugsweise sind die Werkzeugträger 40, 42 noch jeweils gegenüber dem entsprechenden zweiten Schlittenelement 70 um eine senkrecht zur X/Z-Ebene stehende B-Achse drehbar.

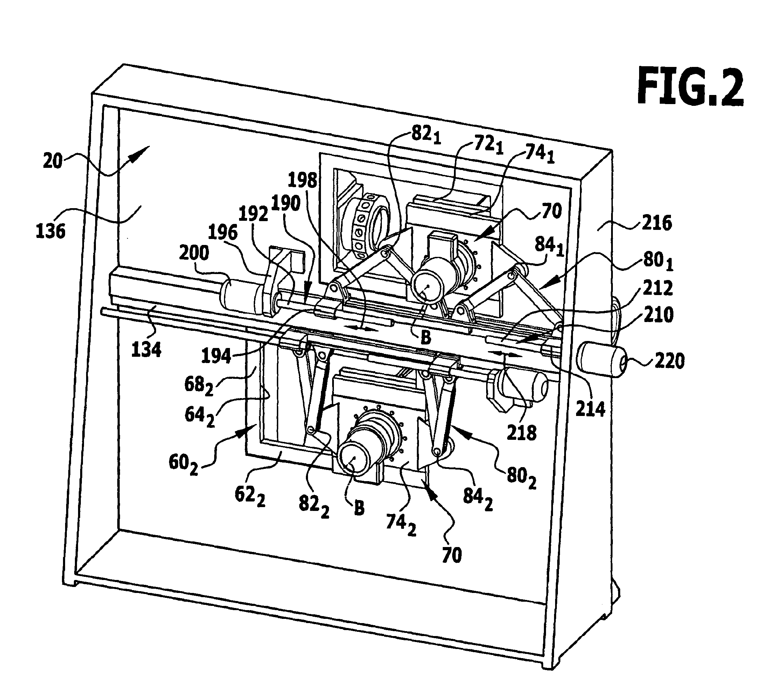

Zum Bewegen des jeweiligen zweiten Schlittenelements 70 relativ zum jeweiligen ersten Schlittenelement 60 ist, wie in Fig. 2 dargestellt, jedem Kreuzschlittensystem 50, 52 eine Antriebsvorrichtung 80 zugeordnet, welche an dem jeweiligen Schlittenelement 70 an zwei im Abstand voneinander angeordneten Angriffspunkten 82, 84 angreift, um das jeweilige zweite Schlittenelement 70 relativ zum ersten Schlittenelement 60 in X- und Z-Richtung in der jeweiligen Kreuzschlittenbewegungsebene zu positionieren.

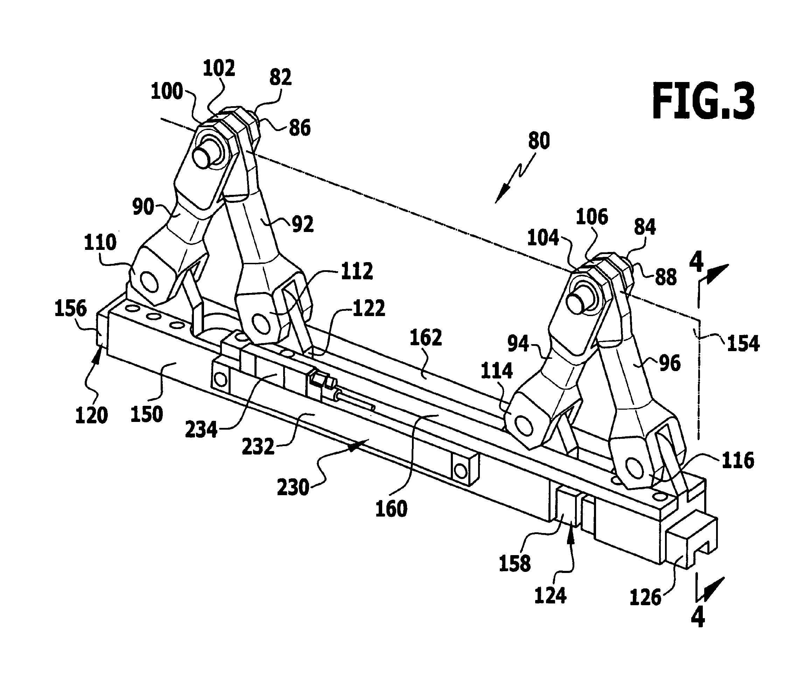

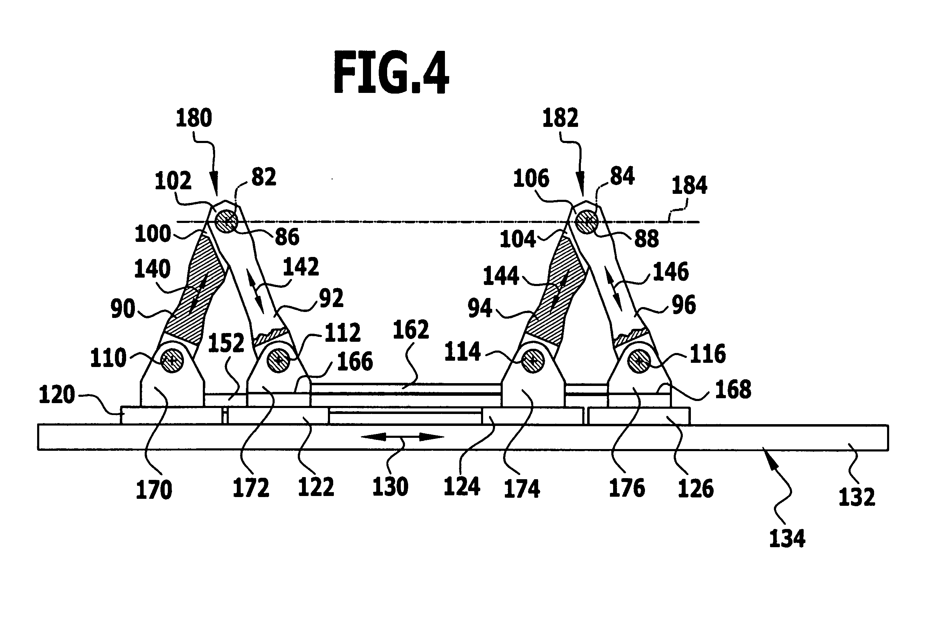

Wie vergrößert in Fig. 3 und 4 dargestellt, umfasst die Antriebsvorrichtung 80 insgesamt vier Antriebsstreben 90, 92, 94, 96, wobei die Antriebsstreben 90 und 92 an dem Angriffspunkt 82, gebildet durch einen Lagerzapfen 86 mittels Gelenken 100, 102 angreifen und die Antriebsstreben 94 und 96 an einem den Angriffspunkt 84 definierenden Lagerzapfen 88 mittels Gelenken 104 und 106 angreifen.

Ferner ist jede der Antriebsstreben 90, 92, 94, 96 mittels eines Gelenks 110, 112, 114, 116 mit jeweils einem Führungsschlitten 120, 122, 124, 126 gelenkig verbunden, wobei die Führungsschlitten 120, 122, 124, 126 längs einer eine gemeinsame Führungsrichtung 130 festlegenden Führungsbahn 132 geführt sind, die beispielsweise durch eine Führungsschiene 134 gebildet ist.

Vorzugsweise ist dabei die Führungsschiene 134 an einer Rückseite 136 des Maschinenbettkörpers 20 angeordnet und vom Maschinenbettkörper 20 gehalten.

Bei dieser Anordnung erstrecken sich die Antriebsstreben 90, 92, 94, 96 mit ihren Längsrichtungen 140, 142, 144, 146 stets quer, insbesondere schräg zu der Führungsrichtung 130 unabhängig von der Position der Führungsschlitten 120 bis 126 längs der Führungsbahn 132 und die Längsrichtungen 140, 142, 144 und 146 verlaufen parallel zu einer Mittelebene 154.

Ferner sind bei dem dargestellten Ausführungsbeispiel die Antriebsstreben 90, 92, 94, 96 so ausgebildet, dass deren Länge zwischen den jeweiligen Gelenken 100 und 110, 102 und 112, 104 und 114 sowie 106 und 116 gleich groß ist.

Darüber hinaus sind die Führungsschlitten 120 und 122 sowie 124 und 126 relativ zueinander so positioniert, dass die Längsrichtungen 140 und 144 der Antriebsstreben 90 und 94 sowie die Längsrichtungen 142 und 146 der Antriebsstreben 92 und 96 parallel zueinander verlaufen.

Dies ist insbesondere dadurch erreichbar, dass die Führungsschlitten 120 und 124, durch Verbindungsstreben 150 und 152 starr miteinander gekoppelt sind, wobei die Verbindungsstreben 150 und 152 zwischen den Führungsschlitten 120 und 124 beispielsweise beiderseits der Mittelebene 154 der Antriebsvorrichtung 80 verlaufen und zwar in einem derartigen Abstand von dem Führungsschlitten 122, dass dieser sich frei zwischen den Verbindungsstreben 150 und 152 und auch zwischen den Führungsschlitten 120 und 124 längs der Führungsbahn 132 bewegen kann.

Vorzugsweise liegen dabei die Verbindungsstreben 150 und 152 so, dass diese an Seitenflächen 156 und 158 der Führungsschlitten 120 und 124 angreifen, wobei die Seitenflächen 156 und 158 beispielsweise ungefähr parallel oder schräg zur Mittelebene 154 verlaufende Seitenflächen der Führungsschlitten 120 und 124 sind.

Ferner sind die Führungsschlitten 122 und 126 ebenfalls durch Verbindungsstreben 160 und 162 starr miteinander gekoppelt, wobei die Verbindungsstreben 162 und 164 an den Führungsschlitten 122 und 126 im Bereich von quer zur Mittelebene 154 verlaufenden Oberseiten 166 und 168 angreifen und somit kollisionsfrei zu den Verbindungsstreben 150 und 152 verlaufen, und wobei die Verbindungsstreben 160 und 162 in einem derartigen Abstand voneinander angeordnet sind, dass ein Gelenkflansch 174 des Führungsschlittens 124 frei zwischen den Verbindungsstreben 160 und 162 bewegbar ist.

Im Übrigen sind sämtliche, die Gelenke 110, 112, 114 und 116 tragenden Gelenkflansche 170, 172, 174 und 176 so ausgebildet, dass die Gelenke 110, 112, 114 und 116 in demselben Abstand von der Führungsschiene 134 und parallel zur Führungsrichtung 130 durch Bewegen der Führungsschlitten 120, 122, 124 und 126 bewegbar sind.

Durch die starre Verbindung der Führungsschlitten 120 und 124 sowie 122 und 126 mittels der Verbindungsstreben 150 und 152 bzw. 160 und 162 ist die parallele Ausrichtung der Längsrichtungen 140 und 144 der Antriebsstreben 90 und 94 sowie der Längsrichtungen 142 und 146 der Antriebsstreben 92 und 96 in jeder Relativposition der Führungsschlitten 120 und 124 bezüglich den Führungsschlitten 122 und 126 gewährleistet.

Somit bilden die Antriebsstreben 90 und 92 deren Gelenke 110 und 112 stets einen Abstand voneinander aufweisen, während deren Gelenke 100 und 102 an demselben Lagerbolzen 86 angreifen, die Schenkel eines gleichschenkligen Dreiecks, welches die Position des Angriffspunktes 82 einerseits in der Führungsrichtung 130, welche vorzugsweise parallel zur Z-Richtung der Werkzeugmaschine verläuft, eindeutig festlegt und andererseits auch deren Abstand von der Führungsbahn 132 eindeutig festlegt, welcher der X-Richtung dann entspricht, wenn - wie beim dargestellten Ausführungsbeispiel vorgesehen, die Mittelebene 154 der Antriebsvorrichtung 80 parallel zu der Kreuzschlittenbewegungsebene und somit parallel zu den Oberflächen 66 und 68 des ersten Schlittenelements 60 verläuft.

Durch die absolute Position der Führungsschlitten 120 und 122 in der Führungsrichtung 130 lässt sich somit die Z-Position des Angriffspunktes 82 am Schlittenelement 70 eindeutig festlegen und durch die Relativposition der Führungsschlitten 120 und 122 lässt sich die X-Position des Angriffspunkts 82 am Schlittenelement 70 eindeutig festlegen.

Der einzige Freiheitsgrad der Bewegung des Schlittenelements 70 bei einer derartigen Festlegung des Angriffspunktes 82 besteht darin, dass das Schlittenelement 70 aufgrund der Gelenke 100 und 102 und die somit relativ zu diesen drehbaren Lagerzapfen 86 die Möglichkeit hat, sich um den Angriffspunkt 82 zu drehen.

Insgesamt bilden somit die Antriebsstreben 90 und 92, deren Längsrichtungen 140 und 142 quer zueinander, vorzugsweise V-förmig bezüglich des Angriffspunktes 82 verlaufen, eine Antriebsgruppe 180, welche die X- und Z-Position des Angriffspunktes 82 des Schlittenelements 70 festlegt.

In gleicher Weise bilden die Antriebsstreben 94 und 96 eine Antriebsgruppe 182, da auch diese Antriebsstreben 94 und 96 die Schenkel eines gleichschenkligen Dreiecks bilden und ausgehend von den im Abstand voneinander angeordneten Gelenken 114 und 116 und den gemeinsam an dem Lagerzapfen 88 angreifenden Gelenken 104 und 106 den Angriffspunkt 84 aus denselben Gründen, wie im Zusammenhang mit der ersten Antriebsgruppe 180 beschrieben, relativ zur Z-Richtung und relativ zur X-Richtung der Werkzeugmaschine eindeutig definieren, so dass das Schlittenelement 70 lediglich noch die Möglichkeit hätte, sich um den Angriffspunkt 84 zu drehen.

Durch die eindeutige Festlegung beider Angriffspunkte 82 und 84 ist jedoch die Position des Schlittenelements 70 hinsichtlich seiner Position in der X-Richtung und der Z-Richtung ebenfalls eindeutig festgelegt, und außerdem lässt sich mit dieser Antriebsvorrichtung 80 das Schlittenelement 70 lediglich in Stellungen verschieben, in denen das Schlittenelement 70 stets dieselbe Ausrichtung relativ zur Z-Richtung und zur X-Richtung beibehält, was dadurch erkennbar ist, das eine Verbindungslinie 184 zwischen den Angriffspunkten 82 und 84 unabhängig von der Position der Führungsschlitten 122 und 126 relativ zu den Führungsschlitten 120 und 124 stets parallel zu der Führungsrichtung 130 ausgerichtet bleibt, da aufgrund der starren mechanischen Kopplung der Führungsschlitten 120 und 124 sowie 122 und 126 auch die Antriebsstreben 90 und 94 sowie 92 und 96 stets parallel zueinander ausgerichtet bleiben und somit eine doppelte Parallelführung für das Schlittenelement 70 besteht.

Wie in Fig. 2 dargestellt, erfolgt die Bewegung der Führungsschlitten 120 und 124 mittels eines ersten Linearantriebs 190, der beispielsweise als elektrischer Linearmotor ausgebildet sein könnte, jedoch vorzugsweise ein Spindelantrieb ist, und eine Verstellspindel 192 umfasst, auf welcher eine Spindelmutter 194 sitzt, die beispielsweise fest mit dem Lagerflansch 170 des ersten Führungsschlittens 120 verbunden ist.

Die Verstellspindel 192 ist ihrerseits in einem fest mit dem Maschinenbettkörper 20 verbundenen Lagerträger 196 in Richtung ihrer Längsachse 198 unverschieblich, jedoch drehbar gelagert, so dass ein Drehen der Verstellspindel 192 zu einer Verschiebung der Spindelmutter 194 in Richtung der Längsachse 198 führt.

Ferner ist die Verstellspindel 192 durch einen Antrieb 200 um die Längsachse 198 drehend antreibbar.

Somit sind durch den Linearantrieb 190 die Führungsschlitten 120 und 124 gemeinsam in der Führungsrichtung 130 bewegbar.

In gleicher Weise ist zum Bewegen der Führungsschlitten 122 und 126 ein zweiter Linearantrieb 210 vorgesehen, welcher eine Verstellspindel 212, eine Spindelmutter 214 und einen Lagerträger 216 umfasst, wobei in dem Lagerträger 216 die Verstellspindel 212 in Richtung ihrer Längsachse 218 unbeweglich, jedoch drehbar aufgenommen ist.

Da auch beim zweiten Linearantrieb 210 die Spindelmutter 214 fest mit einem der Führungsschlitten, in diesem Fall der Führungsschlitten 126, verbunden ist, sind durch Drehen der Verstellspindel 212, beispielsweise angetrieben durch einen Antrieb 220 sowohl der Führungsschlitten 126 als auch der Führungsschlitten 122 in der Führungsrichtung 130 verschiebbar.

Je nach absoluter Position der Führungsschlitten 120 und 124 bzw. 122 und 126 und je nach relativer Position der Führungsschlitten 120 und 124 bzw. 122 und 126 ist somit die Position des zweiten Schlittenelements 70 sowohl in der Z-Richtung als auch in der X-Richtung mit der erforderlichen Steifigkeit festlegbar.

Die absolute Position der Führungsschlitten 120 und 124 bzw. 122 und 126 lässt sich dabei durch den Linearantrieben 190 und 210 zugeordnete Drehgeber erfassen, welche die Drehstellungen der Verstellspindeln 192 und 212 detektieren.

Ferner lässt sich die Relativposition der miteinander verbundenen Führungsschlitten 120 und 124 bzw. 122 und 126, wie bereits in Fig. 3 dargestellt, durch ein Messsystem 230 erfassen, welches ein beispielsweise auf der Verbindungsstrebe 150 angeordnetes erstes Element 232 und ein an der Verbindungsstrebe 160 angeordnetes zweites Element 234 umfasst, so dass die beiden Elemente 232 und 234 gegeneinander verschiebbar sind, wobei eines der Elemente einen Glasmaßstab trägt, mit welchem die Relativposition der miteinander gekoppelten Führungsschlitten 120 und 124 sowie 122 und 126 erfassbar ist, wobei diese Relativposition ein Maß für die Position des zweiten Schlittenelements 70 in der X-Richtung der Werkzeugmaschine darstellt.

Um die Auswirkungen von thermischen Verlagerungen auf die Position der Schlittenelemente 70₁ und 70₂ möglichst gering zu halten, sind die Führungsschienen 134 der Antriebsvorrichtungen 80 vorzugsweise so angeordnet, dass diese auf einer der Spindelachse 26 zugewandten Seite der Angriffspunkte 82, 84 liegen, insbesondere nahe einer Referenzebene 240 der Werkzeugmaschine, welche durch die Spindelachse 26 und senkrecht zur X-Richtung, das heißt parallel zur Y-Richtung, verläuft. Somit sind die durch die erfindungsgemäßen Antriebsvorrichtungen 80 bedingten thermischen Verlagerungen minimal, insbesondere da die Antriebsstreben 90, 92, 94, 96 nicht eigene wärmeabgebende Antriebe aufweisen, sondern die wärmeabgebenden Antriebe, nämlich die Antriebe 200 und 220 in ausreichendem Abstand von der Antriebsvorrichtung 80 angeordnet werden können, so dass nur ein indirekter Wärmeeintrag über die Antriebe 200, 220 in die erfindungsgemäßen Antriebsvorrichtungen 80₁ und 80₂ erfolgt, und folglich die dadurch bedingten thermischen Verlagerungen ebenfalls minimal sind.

Ferner ist die der jeweiligen Antriebsvorrichtung 80₁ und 80₂ zugeordnete Führungsschiene 134 unmittelbar fest mit dem Maschinenbettkörper 20 nahe der Referenzebene 240 verbunden, so dass thermische Verlagerungen der Referenzebene 240 selbst, beispielsweise bedingt durch eine Erwärmung des Maschinenbettkörpers 20, sich nicht auf die Positionsgenauigkeit des jeweiligen zweiten Schlittenelements 70₁ bzw. 70₂ auswirken, da sich deren Position im Wesentlichen auf die relative Lage zur Referenzebene 240 bezieht, deren absolute Lage unerheblich ist.

Die Antriebe 200, 220 jeder der Antriebsvorrichtungen 80₁ und 80₂ sind mittels einer als Ganzes mit 250 bezeichneten Steuerung steuerbar, welche durch synchrones Verschieben der miteinander gekoppelten Führungsschlitten 120 und 124 bzw. 122 und 126 das jeweilige Schlittenelement 70 in der X-Richtung positioniert und die gewünschte Position des Schlittenelements 70 in der X-Richtung in eine Relativposition zwischen den miteinander gekoppelten Schlittenelementen 120 und 124 bzw. 122 und 126 umrechnet.

## Patentansprüche

1. Werkzeugmaschine zum Bearbeiten eines Werkstücks (WS) durch eine Relativbewegung zwischen dem Werkstück (WS) und einem Werkzeug (WZ), umfassend ein Maschinengestell (10), eine am Maschinengestell (10) angeordnete Spindel (22, 24) mit einer Spindelachse (26) und mit einer ersten Aufnahme (34, 36) für das Werkstück (WS) oder das Werkzeug (WZ), ein am Maschinengestell (10) angeordnetes Kreuzschlittensystem (50, 52) mit einem am Maschinengestell (10) angeordneten ersten Schlittenelement (60) und mit einem an diesem geführten eine zweite Aufnahme (44, 46) für das Werkzeug (WZ) bzw. das Werkstück (WS) tragenden zweiten Schlittenelement (70), welches durch das Kreuzschlittensystem (50, 52) relativ zum ersten Schlittenelement (60) und somit auch relativ zur ersten Aufnahme (34, 36) in Richtung zweier, quer zueinander verlaufender Kreuzschlittenbewegungsachsen (X, Z) in einen festgelegten Bewegungsbereich einer Kreuzschlittenbewegungsfläche bewegbar ist, und eine Antriebsvorrichtung (80) zum Bewegen des relativ zur ersten Aufnahme (34, 36) bewegbaren zweite Schlittenelements (70), welche an dem zweiten Schlittenelement (70) an mindestens zwei im Abstand voneinander angeordneten Angriffspunkten (82, 84) mit mindestens drei sich parallel zu mindestens zwei verschiedenen Richtungen erstreckenden Antriebsstreben (90, 92, 94, 96) mit jeweils einem Gelenk (100, 102, 104, 106) angreift und mit welcher die mindestens zwei Angriffspunkte (82, 84) mittels der mindestens drei Antriebsstreben (90, 92, 94, 96) positionierbar sind,
**dadurch gekennzeichnet, dass** an dem zweiten Schlittenelement (70) vier längeninvariante Antriebsstreben (90, 92, 94, 96) mit jeweils einem Gelenk (100, 102, 104, 106) angreifen, dass die Antriebsstreben (90, 94; 92, 96) mit ihren Längsrichtungen (140, 142, 144, 146) parallel zu einer Mittelebene (154) verlaufen, dass jeweils zwei Antriebsstreben (90, 94; 92, 96) der vier Antriebsstreben (90, 92, 94, 96) parallel zueinander verlaufen, dass jede der Antriebsstreben (90, 94; 92, 96) mit einem Führungsschlitten (120, 122, 124, 126) gelenkig verbunden ist, der quer zu der Längsrichtung (140, 142, 144, 146) der jeweiligen Antriebsstreben (90, 92, 94, 96) linear, bewegbar geführt ist und dass Führungsbahnen (132) für alle Führungsschlitten (120, 122, 124, 126) auf der der Spindelachse (26) zugewandten Seite der Angriffspunkte (82, 84) angeordnet sind.

2. Werkzeugmaschine nach Anspruch 1, **dadurch gekennzeichnet, dass** die vier Antriebsstreben (90, 92, 94, 96) zwei Antriebsgruppen (180, 182) mit je zwei nicht parallelen Antriebsstreben (90, 92; 94, 96) bilden.

3. Werkzeugmaschine nach Anspruch 2, **dadurch gekennzeichnet, dass** mit der ersten Antriebsgruppe (180) eine Position des Schlittenelements (70) bis auf eine erste noch mögliche Bewegungsform festlegbar ist.

4. Werkzeugmaschine nach Anspruch 2 oder 3, **dadurch gekennzeichnet, dass** mit der zweiten Antriebsgruppe (182) eine Position des Schlittenelements (70) bis auf eine zweite noch mögliche Bewegungsform festlegbar ist.

5. Werkzeugmaschine nach einem der Ansprüche 2 bis 4, **dadurch gekennzeichnet, dass** die Antriebsstreben (90, 92; 94, 96) einer der Antriebsgruppen (180; 182) an einem gemeinsamen Angriffspunkt (82; 84) am Schlittenelement (70) angreifen.

6. Werkzeugmaschine nach einem der voranstehenden Ansprüche, **dadurch gekennzeichnet, dass** die Antriebsstreben (90, 92; 94, 96) jeder der Antriebsgruppen (180; 182) jeweils an einem von zwei im Abstand voneinander angeordneten Angriffspunkten (82; 84) am Schlittenelement (70) angreifen.

7. Werkzeugmaschine nach einem der voranstehenden Ansprüche, **dadurch gekennzeichnet, dass** die Führungsschlitten (120, 122, 124, 126) der vier Antriebsstreben (90, 92, 94, 96) in zueinander parallel verlaufenden Führungsrichtungen (130) geführt sind.

8. Werkzeugmaschine nach einem der Ansprüche 2 bis 7, **dadurch gekennzeichnet, dass** ein erster Führungsschlitten (120) der ersten Antriebsgruppe (180) und ein erster der Führungsschlitten (124) der zweiten Antriebsgruppe (182) längs der selben Führungsrichtung (130) bewegbar sind.

9. Werkzeugmaschine nach Anspruch 8, **dadurch gekennzeichnet, dass** die ersten Führungsschlitten (120, 124) der ersten und zweiten Antriebsgruppe (180, 182) auf einer gemeinsamen Führungsbahn (132) geführt sind.

10. Werkzeugmaschine nach einem der Ansprüche 2 bis 9, **dadurch gekennzeichnet, dass** ein zweiter der Führungsschlitten (122) der ersten Antriebsgruppe (180) und ein zweiter der Führungsschlitten (126) der zweiten Antriebsgruppe (182) längs der selben Führungsrichtung (130) bewegbar sind.

11. Werkzeugmaschine nach Anspruch 10, **dadurch gekennzeichnet, dass** die zweiten Führungsschlitten (122, 126) der ersten und zweiten Antriebsgruppe (180, 182) auf einer gemeinsamen Führungsbahn (132) geführt sind.

12. Werkzeugmaschine nach einem der Ansprüche 8 bis 11, **dadurch gekennzeichnet, dass** die ersten Führungsschlitten (120, 124) der ersten und zweiten Antriebsgruppe (180, 182) starr miteinander gekoppelt sind.

13. Werkzeugmaschine nach Anspruch 12, **dadurch gekennzeichnet, dass** die ersten Führungsschlitten (120, 124) mechanisch starr miteinander gekoppelt sind.

14. Werkzeugmaschine nach einem der Ansprüche 8 bis 13, **dadurch gekennzeichnet, dass** die zweiten Führungsschlitten (122, 126) der ersten und zweiten Antriebsgruppe (180, 182) starr miteinander gekoppelt sind.

15. Werkzeugmaschine nach Anspruch 14, **dadurch gekennzeichnet, dass** die zweiten Führungsschlitten (122, 126) mechanisch starr miteinander gekoppelt sind.

16. Werkzeugmaschine nach einem der voranstehenden Ansprüche, **dadurch gekennzeichnet, dass** alle Führungsschlitten (120, 122, 124, 126) auf einer gemeinsamen Führungsbahn (132) geführt sind.

17. Werkzeugmaschine nach Anspruch 16, **dadurch gekennzeichnet, dass** die Führungsschlitten (120, 122, 124, 126) auf der Führungsbahn (132) aufeinanderfolgend angeordnet sind.

18. Werkzeugmaschine nach Anspruch 17, **dadurch gekennzeichnet, dass** die Führungsschlitten (120, 122, 124, 126) jeder Antriebsgruppe (180, 182) unmittelbar aufeinanderfolgend angeordnet sind.

19. Werkzeugmaschine nach einem der Ansprüche 16 bis 18, **dadurch gekennzeichnet, dass** eine mechanisch starre Verbindung (150, 152) zwischen den ersten Führungsschlitten (120, 124) auf einer anderen Seite der Führungsbahn (132) verläuft als eine mechanisch starre Verbindung (160, 162) zwischen den zweiten Führungsschlitten (122, 126).

20. Werkzeugmaschine nach einem der voranstehenden Ansprüche, **dadurch gekennzeichnet, dass** jeweils zwei (90, 92; 94, 96) der vier Antriebsstreben dieselbe Länge aufweisen.

21. Werkzeugmaschine nach einem der voranstehenden Ansprüche, **dadurch gekennzeichnet, dass** alle vier Antriebsstreben (90, 92, 94, 96) dieselbe Länge aufweisen.

22. Werkzeugmaschine nach einem der Ansprüche 13 bis 21, **dadurch gekennzeichnet, dass** den jeweils mechanisch miteinander gekoppelten Führungsschlitten (120, 124; 122, 126) ein Linearantrieb (190, 210) zugeordnet ist.

23. Werkzeugmaschine nach Anspruch 22, **dadurch gekennzeichnet, dass** der Linearantrieb ein Spindelantrieb (190, 210) ist.

24. Werkzeugmaschine nach einem der voranstehenden Ansprüche, **dadurch gekennzeichnet, dass** alle Führungsbahnen (132) für die Führungsschlitten (120, 122, 124, 126) auf derselben Seite der Angriffspunkte (82, 84) angeordnet sind.

25. Werkzeugmaschine nach einem der Ansprüche 12 bis 24, **dadurch gekennzeichnet, dass** ein Messsystem (230) vorgesehen ist, welches eine Relativposition der ersten Führungsschlitten (120, 124) relativ zu den zweiten Führungsschlitten (122, 126) erfasst.

26. Werkzeugmaschine nach Anspruch 25, **dadurch gekennzeichnet, dass** das Messsystem (230) an Verbindungsstreben (150, 160) der ersten Führungsschlitten (120, 124) und der zweiten Führungsschlitten (122, 126) angeordnet ist.

27. Werkzeugmaschine nach Anspruch 26, **dadurch gekennzeichnet, dass** die Führungsbahnen (132) für die Führungsschlitten (120, 122, 124, 126) nahe einer Referenzebene (240) angeordnet sind, die durch die Spindelachse (26) und senkrecht zur X-Richtung verläuft.

## Claims

1. Machine tool for machining a workpiece (WS) by a relative movement between the workpiece (WS) and a tool (WZ), comprising a machine frame (10), comprising a spindle (22, 24) having a spindle axis (26), the spindle being disposed on the machine frame (10) and having a first receiving means (34, 36) for the workpiece (WS) or the tool (WZ), comprising a compound slide system (50, 52), which is disposed on the machine frame (10) and has a first slide element (60) that is disposed on the machine frame (10), the compound slide system having a second slide element (70) that is guided on the first slide element and carries a second receiving means (44, 46) for the tool (WZ) or the workpiece (WS), the second slide element being movable by the compound slide system (50, 52) in relation to the first slide element (60), and thus also in relation to the first receiving means (34, 36), in a fixed movement zone of a compound slide movement area, in the direction of two compound slide movement axes (X, Z) running transversely in relation to one another, and comprising a drive device (80) for moving the second slide element (70) that is movable in relation to the first receiving means (34, 36), which drive device acts on the second slide element (70) at at least two spaced-apart points of application (82, 84) by at least three drive struts (90, 92, 94, 96) extending parallel to at least two different directions and each having a pivot joint (100, 102, 104, 106), and with which drive device the at least two points of application (82, 84) can be positioned by means of the at least three drive struts (90, 92, 94, 96), **characterized in that** four drive struts (90, 92, 94, 96) of invariant length, each with a pivot joint (100, 102, 104, 106), act on the second slide element (70), **in that** the drive struts (90, 94; 92, 96) extend with their longitudinal directions (140, 142, 144, 146) parallel to a central plane (154), **in that** each two drive struts (90, 94; 92, 96) of the four drive struts (90, 92, 94, 96) run parallel to one another, **in that** each of the drive struts (90, 94; 92, 96) is pivotally connected to a guiding slide (120, 122, 124, 126) that is guided in a linearly movable manner transversely in relation to the longitudinal direction (140, 142, 144, 146) of the respective drive struts (90, 92, 94, 96), and **in that** guideways (132) for all of the guiding slides (120, 122, 124, 126) are disposed on the side of the points of application (82, 84) facing the spindle axis (26).

2. Machine tool according to Claim 1, **characterized in that** the four drive struts (90, 92, 94, 96) form two drive groups (180, 182), each with two non-parallel drive struts (90, 92; 94, 96).

3. Machine tool according to Claim 2, **characterized in that** a position of the slide element (70) can be fixed with the first drive group (180), apart from a first still possible form of movement.

4. Machine tool according to Claim 2 or 3, **characterized in that** a position of the slide element (70) can be fixed with the second drive group (182), apart from a second still possible form of movement.

5. Machine tool according to any of Claims 2 to 4, **characterized in that** the drive struts (90, 92; 94, 96) of one of the drive groups (180; 182) act on the slide element (70) at a common point of application (82; 84).

6. Machine tool according to any of the preceding claims, **characterized in that** the drive struts (90, 92; 94, 96) of each of the drive groups (180; 182) respectively act on the slide element (70) at one of two spaced-apart points of application (82; 84).

7. Machine tool according to any of the preceding claims, **characterized in that** the guiding slides (120, 122, 124, 126) of the four drive struts (90, 92, 94, 96) are guided in guiding directions (130) running parallel to one another.

8. Machine tool according to any of Claims 2 to 7, **characterized in that** a first guiding slide (120) of the first drive group (180) and a first of the guiding slides (124) of the second drive group (182) are movable along the same guiding direction (130).

9. Machine tool according to Claim 8, **characterized in that** the first guiding slides (120, 124) of the first and second drive groups (180, 182) are guided on a common guideway (132).

10. Machine tool according to any of Claims 2 to 9, **characterized in that** a second of the guiding slides (122) of the first drive group (180) and a second of the guiding slides (126) of the second drive group (182) are movable along the same guiding direction (130).

11. Machine tool according to Claim 10, **characterized in that** the second guiding slides (122, 126) of the first and second drive groups (180, 182) are guided on a common guideway (132).

12. Machine tool according to any of Claims 8 to 11, **characterized in that** the first guiding slides (120, 124) of the first and second drive groups (180, 182) are fixedly coupled to one another.

13. Machine tool according to Claim 12, **characterized in that** the first guiding slides (120, 124) are fixedly coupled to one another mechanically.

14. Machine tool according to any of Claims 8 to 13, **characterized in that** the second guiding slides (122, 126) of the first and second drive groups (180, 182) are fixedly coupled to one another.

15. Machine tool according to Claim 14, **characterized in that** the second guiding slides (122, 126) are fixedly coupled to one another mechanically.

16. Machine tool according to any of the preceding claims, **characterized in that** all the guiding slides (120, 122, 124, 126) are guided on a common guideway (132).

17. Machine tool according to Claim 16, **characterized in that** the guiding slides (120, 122, 124, 126) are disposed one following the other on the guideway (132).

18. Machine tool according to Claim 17, **characterized in that** the guiding slides (120, 122, 124, 126) of each drive group (180, 182) are disposed one directly following the other.

19. Machine tool according to any of Claims 16 to 18, **characterized in that** a mechanically fixed connection (150, 152) between the first guiding slides (120, 124) runs on a different side of the guideway (132) than a mechanically fixed connection (160, 162) between the second guiding slides (122, 126).

20. Machine tool according to any of the preceding claims, **characterized in that** each two (90, 92; 94, 96) of the four drive struts are of the same length.

21. Machine tool according to any of the preceding claims, **characterized in that** all four drive struts (90, 92, 94, 96) are of the same length.

22. Machine tool according to any of Claims 13 to 21, **characterized in that** a linear drive (190, 210) is associated with the guiding slides (120, 124; 122, 126) that are respectively mechanically coupled to one another.

23. Machine tool according to Claim 22, **characterized in that** the linear drive is a spindle drive (190, 210).

24. Machine tool according to any of the preceding claims, **characterized in that** all the guideways (132) for the guiding slides (120, 122, 124, 126) are disposed on the same side of the points of application (82, 84).

25. Machine tool according to any of Claims 12 to 24, **characterized in that** a measuring system (230) is provided, which detects a relative position of the first guiding slides (120, 124) in relation to the second guiding slides (122, 126).

26. Machine tool according to Claim 25, **characterized in that** the measuring system (230) is disposed on connecting struts (150, 160) of the first guiding slides (120, 124) and of the second guiding slides (122, 126).

27. Machine tool according to Claim 26, **characterized in that** the guideways (132) for the guiding slides (120, 122, 124, 126) are disposed near a reference plane (240), which runs through the spindle axis (26) and perpendicularly in relation to the X direction.

## Revendications

1. Machine-outil pour l'usinage d'une pièce (WS) par un mouvement relatif entre la pièce (WS) et un outil (WZ), comportant un bâti (10), une broche (22, 24), disposée sur le bâti (10), avec un axe (26) et avec un premier élément de récep-tion (34, 36) pour la pièce (WS) ou l'outil (WZ), un système de chariot deux axes (50, 52), disposé sur le bâti (10), avec un premier élément de chariot (60) disposé sur le bâti (10) et avec un deuxième élément de chariot (70), qui est guidé sur celui-ci et comporte un deuxième élément de réception (44, 46) pour l'outil (WZ) ou la pièce (WS), et qui peut être déplacé par le système de chariot deux axes (50, 52), dans une zone de déplacement définie d'une surface de déplacement du chariot deux axes, par rapport au premier élément de chariot (60) et donc également par rapport au premier élément de réception (34, 36) dans la direction de deux axes de déplacement (X, Z) du chariot deux axes, orientés transversale-ment l'un à l'autre, et un dispositif d'entraîne-ment (80) destiné à déplacer le deuxième élément de chariot (70) mobile par rapport au premier élément de réception (34, 36), lequel est appli-qué sur le deuxième élément de chariot (70) au niveau d'au moins deux points de contact (82, 84), situés à distance l'un de l'autre, avec au moins trois tiges d'entraînement (90, 92, 94, 96), orientées parallèlement par rapport à au moins deux directions différentes et munies chacune d'une articulation (100, 102, 104, 106), et avec lequel lesdits au moins deux points de contact (82, 84) peuvent être positionnés au moyen desdites au moins trois tiges d'entraîne-ment (90, 92, 94, 96), **caractérisée en ce que** quatre tiges d'entraînement (90, 92, 94, 96), invariables en longueur sont appliquées sur le deuxième élément de chariot (70), chacune sur une articulation (100, 102, 104, 106), **en ce que** les tiges d'entraînement (90, 94 ; 92, 96) s'étendent avec leurs directions longitudinales (140, 142, 144, 146) parallèlement à un plan médian (154), **en ce que** respectivement deux tiges d'entraîne-ment (90, 94 ; 92, 96) des quatre tiges d'entraî-nement (90, 92, 94, 96) sont disposées parallèle-ment entre elles, **en ce que** chacune des tiges d'entraînement (90, 94 ; 92, 96) est reliée de manière articulée à un chariot de guidage (120, 122, 124, 126), qui est logé de manière mobile linéairement, transversalement à la direction longitudinale (140, 142, 144, 146) des tiges d'entraînement (90, 92, 94, 96) respectives, et **en ce que** des voies de guidage (132) pour tous les chariots de guidage (120, 122, 124, 126) sont disposées sur le côté des points de contact (82, 84), orienté vers l'axe (26) de la broche.

2. Machine-outil selon la revendication 1, **caractérisée en ce que** les quatre tiges d'entraînement (90, 92, 94, 96) forment deux groupes d'entraînement (180, 182) munis chacun de deux tiges d'entraînement (90, 92 ; 94, 96) non parallèles.

3. Machine-outil selon la revendication 2, **caractérisée en ce qu'**avec le premier groupe d'entraînement (180) peut être fixée une position de l'élément de chariot (70), à l'exception d'une première forme de déplacement encore possible.

4. Machine-outil selon la revendication 2 ou 3, **caractérisée en ce qu'**avec le deuxième groupe d'entraînement (182) peut être fixée une position de l'élément de chariot (70), à l'exception d'une deuxième forme de déplacement encore possible.

5. Machine-outil selon l'une quelconque des revendications 2 à 4, **caractérisée en ce que** les tiges d'entraînement (90, 92 ; 94, 96) de l'un des groupes d'entraînement (180 ; 182) sont appliquées sur l'élément de chariot (70) au niveau d'un point de contact (82 ; 84) commun.

6. Machine-outil selon l'une quelconque des revendications précédentes, **caractérisée en ce que** les tiges d'entraînement (90, 92 ; 94, 96) de chacun des groupes d'entraînement (180 ; 182) sont appliquées sur l'élément de chariot (70) chacune au niveau de l'un des deux points de contact (82 ; 84) situés à distance l'un de l'autre.

7. Machine-outil selon l'une quelconque des revendications précédentes, **caractérisée en ce que** les chariots de guidage (120, 122, 124, 126) des quatre tiges d'entraînement (90, 92, 94, 96) sont guidés dans des directions de guidage (130) parallèles entre elles.

8. Machine-outil selon l'une quelconque des revendications 2 à 7, **caractérisée en ce qu'**un premier chariot de guidage (120) du premier groupe d'entraînement (180) et un premier chariot de guidage (124) du deuxième groupe d'entraînement (182) sont aptes à se déplacer le long de la même direction de guidage (130).

9. Machine-outil selon la revendication 8, **caractérisée en ce que** les premiers chariots de guidage (120, 124) du premier et du deuxième groupe d'entraînement (180, 182) sont guidés sur une voie de guidage (132) commune.

10. Machine-outil selon l'une quelconque des revendications 2 à 9, **caractérisée en ce qu'**un deuxième des chariots de guidage (122) du premier groupe d'entraînement (180) et un deuxième des chariots de guidage (126) du deuxième groupe d'entraînement (182) sont aptes à se déplacer le long de la même direction de guidage (130).

11. Machine-outil selon la revendication 10, **caractérisée en ce que** les deuxièmes chariots de guidage (122, 126) du premier et du deuxième groupe d'entraînement (180, 182) sont guidés sur une voie de guidage (132) commune.

12. Machine-outil selon l'une quelconque des revendications 8 à 11, **caractérisée en ce que** les premiers chariots de guidage (120, 124) du premier et du deuxième groupe d'entraînement (180, 182) sont couplés de manière rigide l'un à l'autre.

13. Machine-outil selon la revendication 12, **caractérisée en ce que** les premiers chariots de guidage (120, 124) sont couplés mécaniquement de manière rigide l'un à l'autre.

14. Machine-outil selon l'une quelconque des revendications 8 à 13, **caractérisée en ce que** les deuxièmes chariots de guidage (122, 126) du premier et du deuxième groupe d'entraînement (180, 182) sont couplés de manière rigide l'un à l'autre.

15. Machine-outil selon la revendication 14, **caractérisée en ce que** les deuxièmes chariots de guidage (122, 126) sont couplés mécaniquement de manière rigide l'un à l'autre.

16. Machine-outil selon l'une quelconque des revendications précédentes, **caractérisée en ce que** tous les chariots de guidage (120, 122, 124, 126) sont guidés sur une voie de guidage (132) commune.

17. Machine-outil selon la revendication 16, **caractérisée en ce que** les chariots de guidage (120, 122, 124, 126) sont disposés les uns à la suite des autres sur la voie de guidage (132).

18. Machine-outil selon la revendication 17, **caractérisée en ce que** les chariots de guidage (120, 122, 124, 126) de chaque groupe d'entraînement (180, 182) sont disposés directement les uns à la suite des autres.

19. Machine-outil selon l'une quelconque des revendications 16 à 18, **caractérisée en ce qu'**une liaison (150, 152) mécaniquement rigide entre les premiers chariots de guidage (120, 124) s'étend sur un autre côté de la voie de guidage (132) qu'une liaison (160, 162) mécaniquement rigide entre les deuxièmes chariots de guidage (122, 126).

20. Machine-outil selon l'une quelconque des revendications précédentes, **caractérisée en ce que** respectivement deux (90, 92 ; 94, 96) des quatre tiges d'entraînement ont la même longueur.

21. Machine-outil selon l'une quelconque des revendications précédentes, **caractérisée en ce que** les quatre tiges d'entraînement (90, 92, 94, 96) ont la même longueur.

22. Machine-outil selon l'une quelconque des revendications 13 à 21, **caractérisée en ce qu'**un entraînement linéaire (190, 210) est associé aux chariots de guidage (120, 124 ; 122, 126) couplés respectivement mécaniquement entre eux.

23. Machine-outil selon la revendication 22, **caractérisée en ce que** l'entraînement linéaire est un entraînement à broche (190, 210).

24. Machine-outil selon l'une quelconque des revendications précédentes, **caractérisée en ce que** toutes les voies de guidage (132) pour les chariots de guidage (120, 122, 124, 126) sont disposées sur le même côté des points de contact (82, 84).

25. Machine-outil selon l'une quelconque des revendications 12 à 24, **caractérisée en ce qu'**il est prévu un système de mesure (230), qui enregistre une position relative des premiers chariots de guidage (120, 124) par rapport aux deuxièmes chariots de guidage (122, 126).

26. Machine-outil selon la revendication 25, **caractérisée en ce que** le système de mesure (230) est disposé sur des traverses de liaison (150, 160) des premiers chariots de guidage (120, 124) et des deuxièmes chariots de guidage (122, 126).

27. Machine-outil selon la revendication 26, **caractérisée en ce que** les voies de guidage (132) pour les chariots de guidage (120, 122, 124, 126) sont disposées à proximité d'un plan de référence (240), qui passe par l'axe (26) de la broche et s'étend perpendiculairement à la direction X.
